# EUROPEAN PATENT APPLICATION

(11) **EP 1 986 035 A1**
(43) Date of publication of application: **29.10.2008**
(21) Application number: 08251396.1
(22) Date of filing: 11.04.2008
(51) Int. Cl.: G02C 5/18, G02C 5/00

(54) **Structure for eyeglass parts**

(30) Priority: 23.04.2007 JP 2007112679
(71) Applicant: Nakanishi Optical Corporation, Kita-ku Osaka (JP)
(72) Inventor: Nakanishi, Eiichi, Hyoga (JP)
(74) Representative: Price, Paul Anthony King

(57) **Abstract**

The object of the invention is to provide a structure for eyeglass parts which assures excellent connecting strength between the metal core material and the rubber-like elastic material and is free from easy separation of connection surfaces of both materials. Eyeglass parts such as a temple, lens frame, bridge, and top bar are composed by integrally connecting rubber-like elastic material 10 to metal core material 2. Metal core material 2 of temple body 1 is provided with a plurality of through-holes 6 spaced apart in the lengthwise direction, and rubber-like elastic material 10 injection-molded in such manner as to envelop metal core material 2 is integrally connected to metal core material 2 via through-holes 6.

## Description

### FIELD OF THE INVENTION

The present invention relates to a structure for eyeglass parts which fit well and are soft to touch the skin of the person who wears the eyeglasses and capable of preventing positional deflection.

### BACKGROUND ART

It is commonly known that eyeglass parts, for example those using a rubber-like elastic material for a temple in order to make it soft to touch the skin and capable of preventing positional deflection (e.g. refer to Patent documents 1 to 3).

However, the conventional eyeglass parts are structurally such that the whole of the temple formed from a metal core material is covered with a rubber-like elastic material, or a rubber-like elastic material is just connected to the side portion or the earpiece touching the skin of the temple formed from a metal core material.

In the former structure (refer to Patent document 1), it involves such disadvantages that defective adhesion of connection surfaces is liable to take place between the metal core material and the rubber-like elastic material and that the manufacturing cost is very high. Also, in the latter structure (refer to Patent documents 2, 3), there arises a problem that the rubber-like elastic material easily separates from the metal core material.

[Patent document 1] Japanese Utility Model Registration No. 3066357

[Patent document 2] Utility Model Laying-Open Gazette No. H6-84425

[Patent document 3] Japanese Utility Model Registration No. 3115758

### SUMMARY OF THE INVENTION

The present invention is intended to address the problems of the conventional product, and the object of the invention is to provide a structure for eyeglass parts, which assures excellent adhesion between the metal core material and the rubber-like elastic material and is free from easy separation of connection surfaces of both materials.

In order to achieve the above purpose, the present invention is configured in that eyeglass parts such as a temple, lens frame, bridge, and top bar are formed by connecting a rubber-like elastic material to a metal core material so as to be integrally connected to each other

The connecting structure of the present invention that integrally connects a metal core material and a rubber-like elastic material may employ a technical means as described in the following.

That is, the invention of claim 2 is characterized in that the metal core material is provided with a plurality of through-holes spaced apart in the lengthwise direction, and the rubber-like elastic material injection-molded in such manner as to envelop the metal core material is integrally connected to the metal core material via the through-holes.

The invention of claim 3 is characterized in that the metal core material is provided with through-holes formed in a plurality of stopper pieces protruded and spaced apart in the lengthwise direction, and the rubber-like elastic material injection-molded on the metal core material in such manner as to cover the stopper pieces is integrally connected to the metal core material via the through-holes.

The invention of claim 4 is characterized in that a plurality of stopper pieces protruded from the metal core material and spaced apart in the lengthwise direction are provided with constricted portions or bent portions, and the rubber-like elastic material injection-molded on the metal core material in such manner as to cover the stopper pieces is integrally connected to the metal core material via the constricted portions or bent portions.

Further, the invention of claim 5 is characterized in that the metal core material is provided with a groove extending in the lengthwise direction, and the rubber-like elastic material injection-molded in the groove is integrally connected to the metal core material via the groove.

The rubber-like elastic material in the present invention includes natural rubber, synthetic rubber, and silicone rubber.

As described above, according to the present invention, the metal core material and the rubber-like elastic material are integrally connected to each other via a through-hole in the metal core material, through-holes or constricted portions in the stopper pieces, or a groove. Accordingly, the connecting strength between the metal core material and the rubber-like elastic material is very high, and defective connection hardly takes place due to separation of connected surfaces of both materials.

Also, due to such an integrally connecting structure, the rubber-like elastic material can be formed into various shapes, and it is possible to provide very fashionable eyeglass parts.

And, the eyeglass parts of the present invention using the rubber-like elastic material fit well and are soft to touch the skin of the person who wears the eyeglasses and capable of preventing positional deflection.

### BRIEF DESCRIPTION OF THE DRAWINGS

Fig. 1 shows the first preferred embodiment of the present invention applied to a temple of eyeglass, and (a) is a side view and (b) is a plan view.
Fig. 2 is an enlarged sectional view along the line 2 - 2 of Fig. 1 (b).
Fig. 3 is a enlarged side view of an earpiece of the metal core material of the same.
Fig. 4 is a sectional view along the line 4 - 4 of Fig. 3.
Fig. 5 is a sectional view along the line 5 - 5 of Fig. 3.
Fig. 6 shows the second preferred embodiment of the present invention applied to a temple of eyeglass, and (a) is a side view and (b) is a plan view.
Fig. 7 is an enlarged sectional view along the line 7 - 7 of Fig. 6 (b).
Fig. 8 is a enlarged side view of an earpiece of the metal core material of the same.
Fig. 9 is an enlarged plan view of the same
Fig. 10 is an end view of the same.
Fig. 11 shows the third preferred embodiment of the present invention applied to a temple of eyeglass, and (a) is a side view and (b) is a plan view.
Fig. 12 is an enlarged sectional view along the line 12 - 12 of Fig. 11 (b).
Fig. 13 is a enlarged side view of an earpiece of the metal core material of the same.
Fig. 14 is an enlarged plan view of the same.
Fig. 15 is an end view of the same.
Fig. 16 shows the fourth preferred embodiment of the present invention applied to a temple of eyeglass, and (a) is a side view and (b) is a plan view.
Fig. 17 is an enlarged sectional view along the line 17 - 17 of Fig. 16 (b).
Fig. 18 is a enlarged side view of an earpiece of the metal core material of the same.
Fig. 19 is a sectional view along the line 19 -19 of Fig. 18.
Fig. 20 is a sectional view along the line 20 - 20 of Fig. 18.

### DETAILED DESCRIPTION OF THE PREFERRED EMBODIMENTS

The preferred embodiments of the present invention will be described in the following with reference to the drawings.

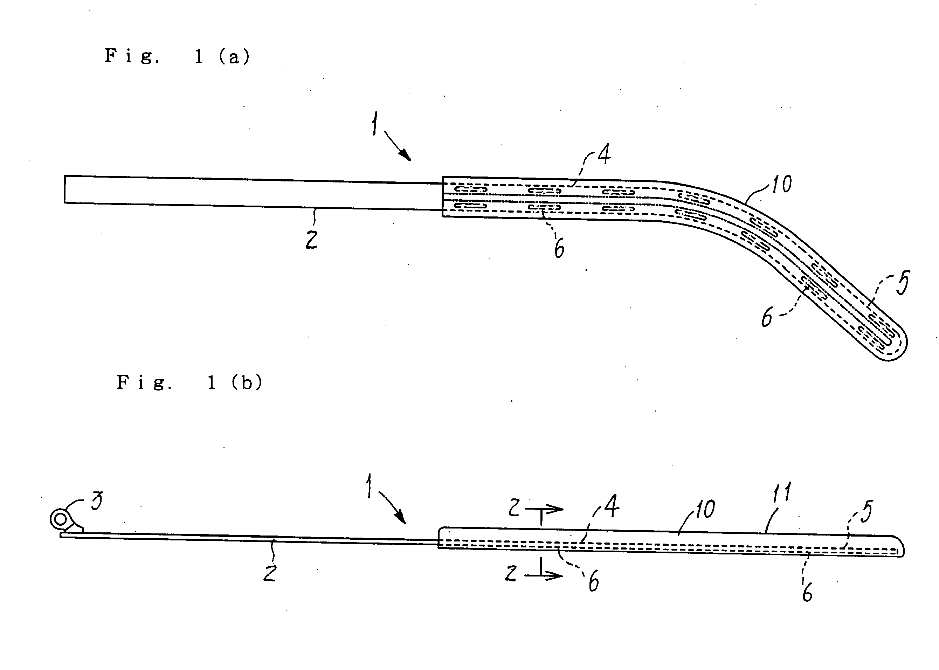

Fig. 1 to Fig. 5 show the first preferred embodiment of the present invention applied to an eyeglass temple.

Hinge part 3 is secured on the end portion of metal core material 2 of temple body 1, and rubber-like elastic material 10 is integrally connected to a portion ranging from side portion 4 to earpiece 5 of metal core material 2 which comes in contact with the skin of the person who wears the eyeglasses.

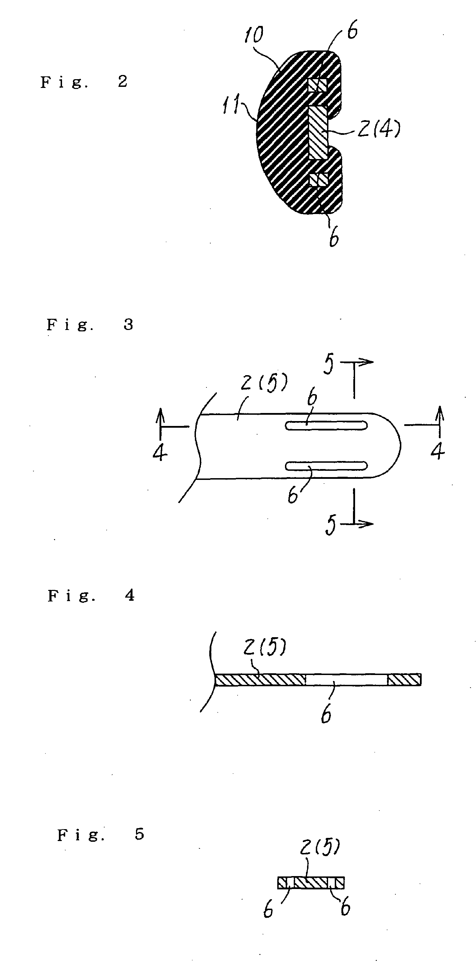

Metal core material 2 is manufactured by punching a plate of metal material such as titanium, stainless steel, and alloy. As shown in Fig. 3 to Fig. 5, many long through-holes 6 spaced apart in the lengthwise direction are formed in a portion ranging from side portion 4 to earpiece 5 to which rubber-like elastic material 10 is connected.

On the other hand, soft rubber materials such as natural rubber, synthetic rubber and silicone rubber are suitable for rubber-like elastic material 10. After side portion 4 and earpiece 5 of metal core material 2 are coated with primer, rubber-like elastic material 10 is injection-molded in such manner as to envelop metal core material 2 and in this way integrally connected thereto. As shown in Fig. 2, since both materials are integrally connected to each other via through-hole 6, the connecting strength between metal core material 2 (4, 5) and rubber-like elastic material 10 is very high, and there is no fear of easy separation of connection surfaces of both materials. Inner side portion 11 of rubber-like elastic material 10 connected to metal core material 2 (4, 5) is desirable to be formed on a curved surface to make it softer to touch the skin.

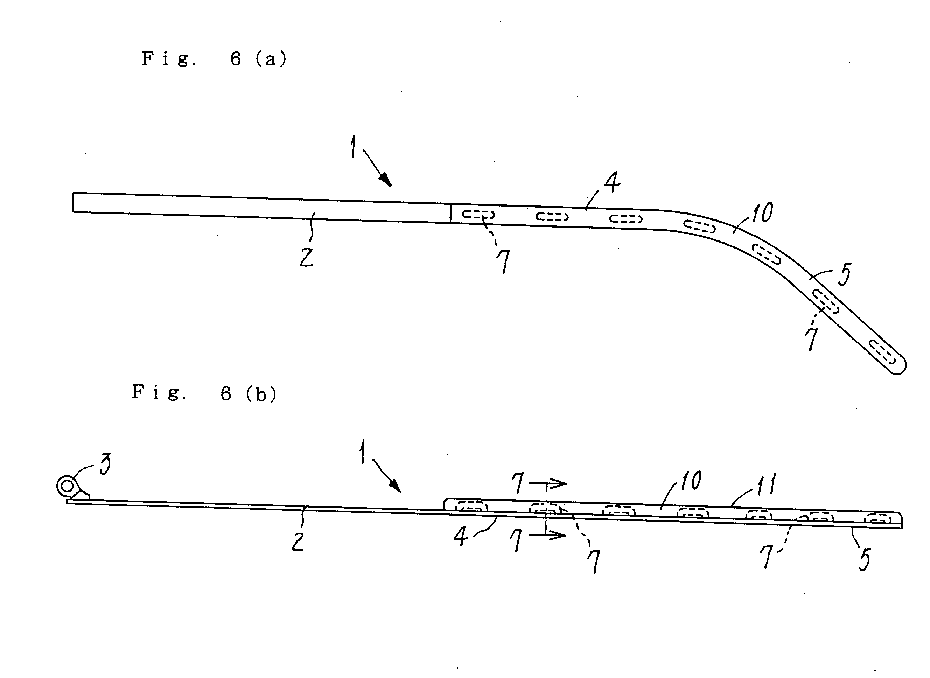

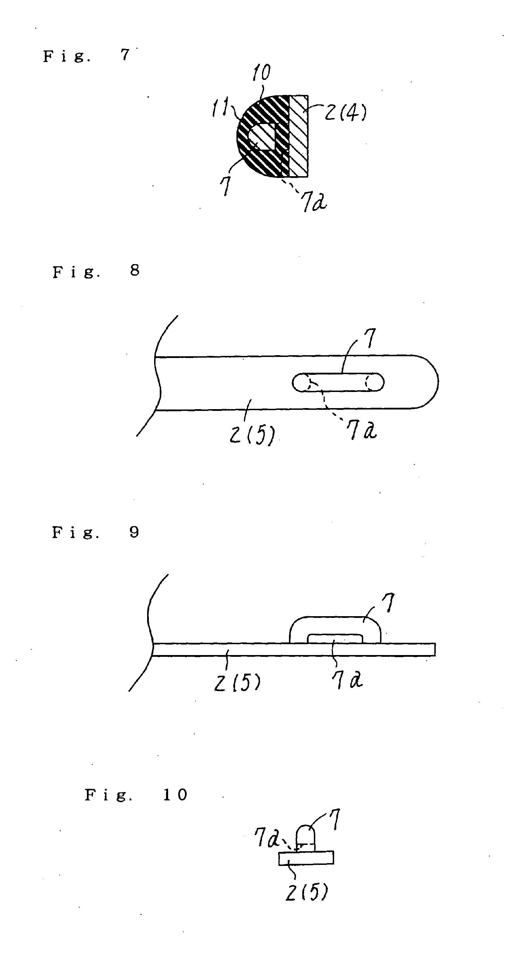

Fig. 6 to Fig. 10 show the second preferred embodiment of the present invention applied to a temple of eyeglass. The same components as in the first preferred embodiment are given same reference numerals, and the description is omitted. In this preferred embodiment, in a range from side portion 4 to earpiece 5 of metal core material 2, many portal stopper pieces 7 spaced apart in the lengthwise direction are disposed in a parallel fashion on the inner side surface thereof. As shown in Fig. 8 to Fig. 10, through-hole 7a is formed between stopper piece 7 and metal core material 2.

Rubber-like elastic material 10 is injection-molded on the inner side portion of metal core material 2 in such manner as to cover stopper piece 7 and in this way integrally connected thereto. As shown in Fig. 7, since the members are integrally connected to each other via through-hole 7a, the connecting strength between metal core material 2 and rubber-like elastic material 10 is very high, and there is no fear of easy separation of connection surfaces of both materials.

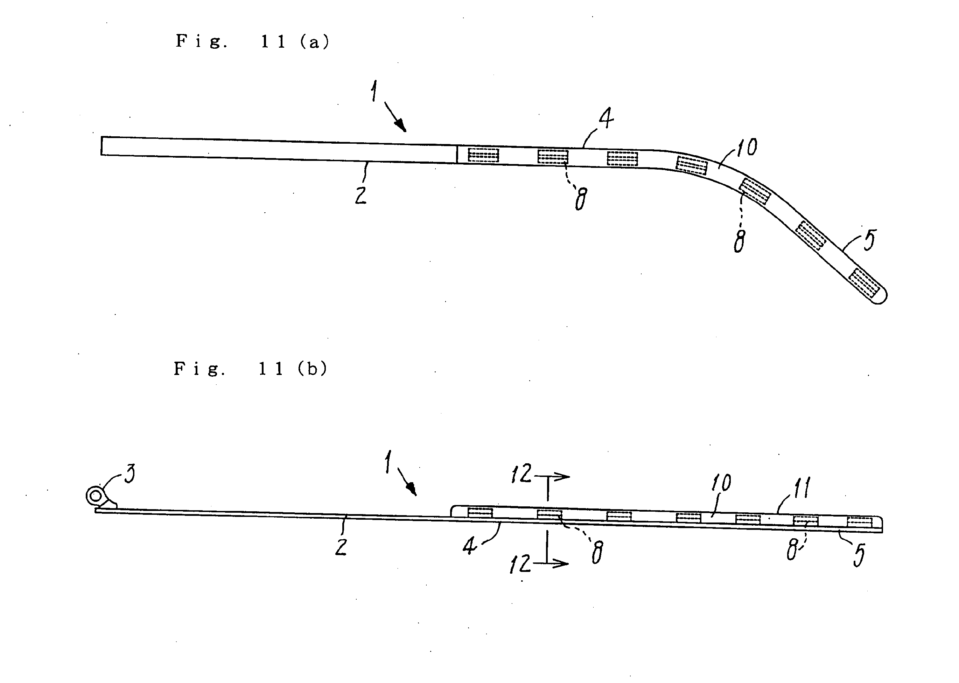

Fig. 11 to Fig. 15 show the third preferred embodiment of the present invention applied to a temple of eyeglass. The same components as in the first preferred embodiment are given same reference numerals, and the description is omitted. In this preferred embodiment, in a range from side portion 4 to earpiece 5 of metal core material 2, many protruded stopper pieces 8 having constricted portion 8a with T-shaped cross-section and spaced apart in the lengthwise direction are disposed on the inner side surface thereof.

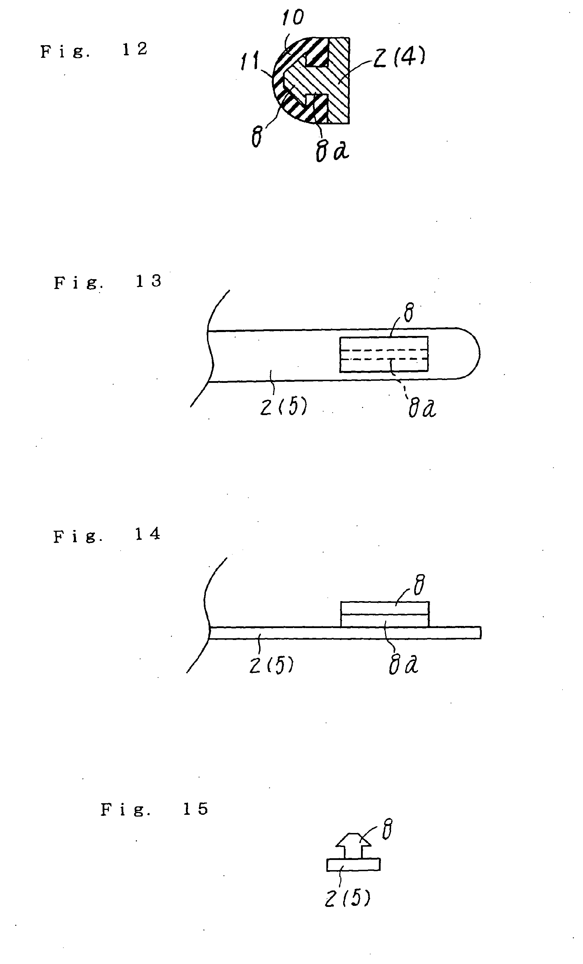

Rubber-like elastic material 10 is injection-molded on the inner side portion of metal core material 2 in such manner as to cover each stopper piece 8. As shown in Fig. 12, since rubber-like elastic material 10 gets into constricted portion 8a and is integrated therewith, the connecting strength between metal core material 2 and rubber-like elastic material 10 is very high, and there is no fear of separation of the connection surfaces of both materials.

Stopper piece 8 is allowable to have a bent portion whose cross-section is hook-shaped.

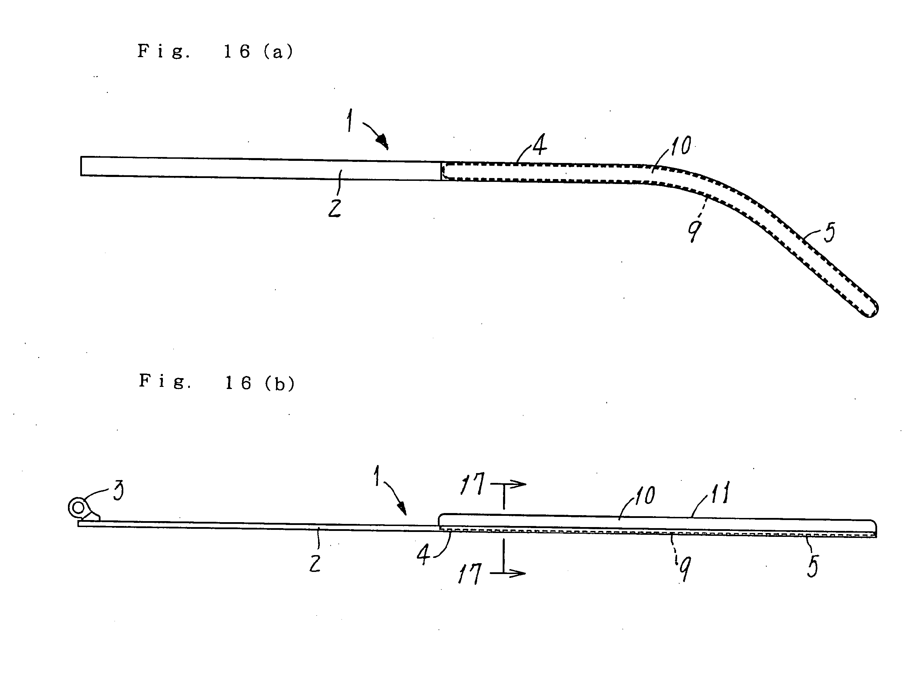

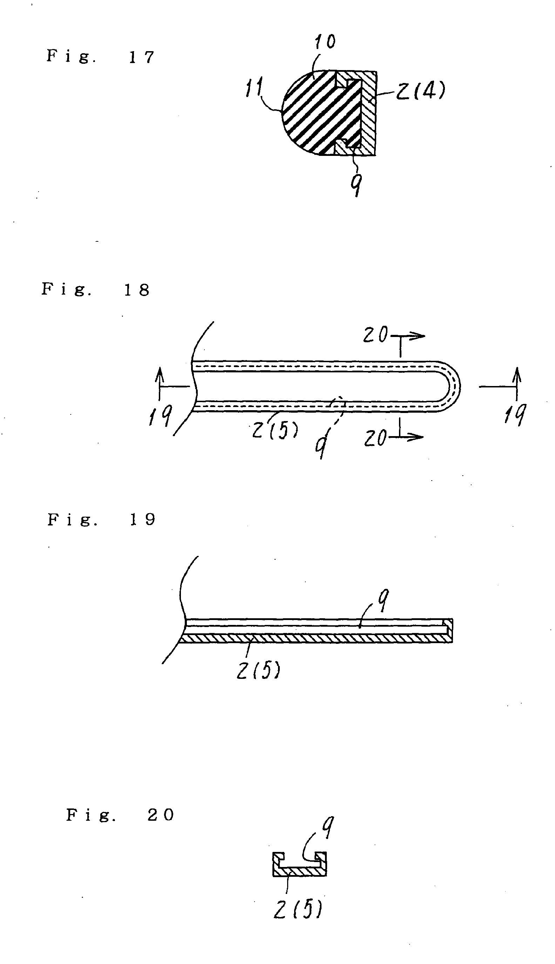

Fig. 16 to Fig. 20 show the fourth preferred embodiment of the present invention applied to a temple of eyeglass. The same components as in the first preferred embodiment are given same reference numerals, and the description is omitted. In this preferred embodiment, in a range from side portion 4 to earpiece 5 of metal core material 2, groove 9 extending in the lengthwise direction is formed in the inner surface thereof (see Fig. 18 or Fig. 19).

And, rubber-like elastic material 10 is injection-molded in such manner as to be buried in groove 9, and as shown in Fig. 17, it is integrally connected to the metal core material via rubber-like elastic material 10 getting into groove 9. Accordingly, the connecting strength between the metal core material and rubber-like elastic material 10 is very high, and there is no fear of easy separation of the connection surfaces of both materials.

In each of the preferred embodiments described above, rubber-like elastic material 10 is integrally connected to metal core material 2 in a range from side portion 4 to earpiece 5 thereof of temple body 1 as an example, but it is also allowable to integrally connect rubber-like elastic material 10 to the whole of metal core material 2.

Also, the present invention can be applied to eyeglass parts such as lens frame, bridge, and top bar as well as the temple.

## Claims

1. A structure for eyeglass parts **characterized in that** a rubber-like elastic material is integrally connected to a metal core material to compose eyeglass parts such as a temple, lens frame, bridge, and top bar.

2. The structure for eyeglass parts of claim 1, wherein the metal core material is provided with a plurality of through-holes spaced apart in the lengthwise direction, and the rubber-like elastic material injection-molded in such manner as to envelop the metal core material is integrally connected to the metal core material via the through-holes.

3. The structure for eyeglass parts of claim 1, wherein the metal core material is provided with through-holes formed in a plurality of stopper pieces protruded and spaced apart in a lengthwise direction, and the rubber-like elastic material injection-molded on the metal core material in such manner as to cover the stopper pieces is integrally connected to the metal core material via the through-holes.

4. The structure for eyeglass parts of claim 1, wherein a plurality of stopper pieces protruded from the metal core material and spaced apart in a lengthwise direction are provided with constricted portions or bent portions, and the rubber-like elastic material injection-molded on the metal core material in such manner as to cover the stopper pieces is integrally connected to the metal core material via the constricted portions or bent portions.

5. The structure for eyeglass parts of claim 1, wherein the metal core material is provided with a groove extending in a lengthwise direction, and the rubber-like elastic material injection-molded in the groove is integrally connected to the metal core material via the groove.
